# EUROPÄISCHE PATENTSCHRIFT

(11) **EP 1 797 987 B1**
(45) Veröffentlichungstag und Bekanntmachung des Hinweises auf die Patenterteilung: **04.03.2009**
(21) Anmeldenummer: 06023494.5
(22) Anmeldetag: 11.11.2006
(51) Int. Cl.: B23K 11/11, B23K 11/20, B23K 35/00

(54) **Bimetallisches Verbindungselement**
dual-metal transition piece
Pièce intermédiaire bi-métallique

(30) Priorität: 16.12.2005 DE 102005060146
(43) Veröffentlichungstag der Anmeldung: 20.06.2007
(73) Patentinhaber: Bayerische Motoren Werke Aktiengesellschaft, 80809 München (DE)
(72) Erfinder: Hornig, Hans, 83536 Gars (DE); Bürger, Andreas, 85777 Fahrenzhausen (DE); Giese, Volker, Dr., 80337 München (DE); Neubauer, Jürgen, 85276 Pfaffenhofen (DE)

(56) Entgegenhaltungen:
- DE-C1- 4 240 823
- JP-A- 5 111 778

## Beschreibung

Die Erfindung betrifft ein bimetallisches Verbindungselement aus zwei übereinander liegenden, an ihrer gemeinsamen Kontaktfläche miteinander verbundenen Schichten aus einem leichtmetallhaltigen und einem eisenhaltigen Material, wobei die leichtmetallhaltige Schicht des Verbindungselementes mit einem Leichtmetallbauteil und die eisenhaltige Schicht des Verbindungselementes durch eine Schweißverbindung mit einem eisenhaltigen Bauteil verbindbar ist.

Ein derartiges Verbindungselement dient zur Herstellung von Schmelzschweißverbindungen zwischen schwer oder nicht miteinander verschweißbaren, leichtmetall- und eisenhaltigen Materialien und wird in der Regel durch Sprengplattieren oder Walzen zweier aufeinander liegender, aus eben diesen Materialien bestehender Blechstreifen hergestellt. Dabei wird das Verbindungselement, wie beispielsweise aus der DE-AS 24 28 274 bekannt ist, in Form eines glatten Blechstreifens ausgebildet, der aus zwei nebeneinander liegenden, in der Mitte verbundenen Teilstreifen aus den jeweiligen Metallen zusammengesetzt ist, oder, wie aus der DE 30 38 824 C2 und der JP-A-05 111 778 bekannt ist, das Verbindungselement besteht aus einem Leichtmetallstreifen, in den einseitig ein Teilstreifen aus dem eisenhaltigen Metall bimetallartig eingesetzt ist. Bei der erstgenannten Variante ist naturgemäß die Verbindung zwischen den beiden Teilstreifen relativ schmal und somit nicht besonders fest. Bei der zweitgenannten Variante entsteht das Problem, dass z.B. beim Punktverschweißen des eingesetzten eisenhaltigen Teilstreifens mit einem materialgleichen Bauteil der Schweißstrom vorher durch das Leichtmetall des Verbindungselementes hindurchfließen muss, so dass die Gefahr der Bildung unkontrollierbarer intermetallischer Phasen in der Fügezone mit den bekannten Nachteilen besteht und außerdem eine der Schweißelektroden auf das Leichtmetall aufgesetzt werden muss, was in relativ kurzer Zeit zu deren Verschmutzung führt.

Es ist daher Aufgabe der vorliegenden Erfindung, ein bimetallisches Verbindungselement der eingangs genannten Art zu schaffen, mit welchem eine hochfeste Schweiß-, insbesondere eine Punktschweißverbindung auf Seiten des eisenhaltigen Materials ohne Berührung des leichtmetallhaltigen Materials im Bereich der Fügezone erzielbar ist.

Diese Aufgabe wird durch ein nach den Merkmalen des Patentanspruchs 1 ausgebildetes Verbindungselement sowie durch ein Verfahren nach Patentanspruch 6 gelöst.

Das erfindungsgemäße Verbindungselement weist die Vorteile der bekannten Ausführungen nach dem oben genannten Stand der Technik auf unter Vermeidung der jeweiligen Nachteile. So besteht zwischen den bimetallischen Schichten einerseits ein großflächiger und dementsprechend lastfester Kontakt und andererseits sind die für die Verschweißung der eisenhaltigen Schicht mit dem eisenhaltigen Bauteil vorgesehenen Bereiche beidseitig frei von dem leichtmetallhaltigen Material und somit hervorragend geeignet für ein automatisiertes Warmfüge- und insbesondere Punktschweißverfahren.

Ein derartiges Verbindungselement lässt sich beispielsweise aus einem durchgehenden eisenhaltigen Blechstreifen und einem gleich breiten, mit Aussparungen und/oder Löchern versehenen leichtmetallhaltigen Blechstreifen durch Walzen oder Sprengplattieren anfertigen, wobei die Aussparungen bzw. Löcher an den späteren Schweißstellen angeordnet sind. Die Aussparungen oder Löcher in der leichtmetallhaltigen Schicht lassen sich auch nachträglich aus dem Verbindungselement zum Beispiel durch Fräsen herausarbeiten. Wahlweise kann das Verbindungselement in weiterer vorteilhafter Ausgestaltung aus jeweils einem durchgehenden eisenhaltigen und einem leichtmetallhaltigen Blechstreifen gefertigt sein, wobei der eisenhaltige Blechstreifen breiter als der leichtmetallhaltige ist und diesen zumindest einseitig überragt, so dass die Schweißstellen auf dem eisenhaltigen Material frei gewählt werden können. Wenn jedoch, wie ebenfalls bevorzugt, der eisenhaltige und der leichtmetallhaltige Blechstreifen etwa gleich breit und seitlich versetzt übereinander liegend ausgebildet sind, sind sowohl die Schweißstellen auf dem eisenhaltigen als auch auf dem leichtmetallhaltigen Material frei vom jeweils anderen Material und frei wählbar.

Die Erfindung wird im Folgenden anhand eines in den Figuren schematisch dargestellten Ausführungsbeispiels näher beschrieben. Es zeigen:
- **Fig. 1**: ein mit einem leichtmetallhaltigen Bauteil verbundenes bimetallisches Verbindungselement in perspektivischer Darstellung; und
- **Fig. 2**: einen Querschnitt durch die Ausführung gemäß Figur 1 während der Verschweißung mit einem eisenhaltigen Bauteil.

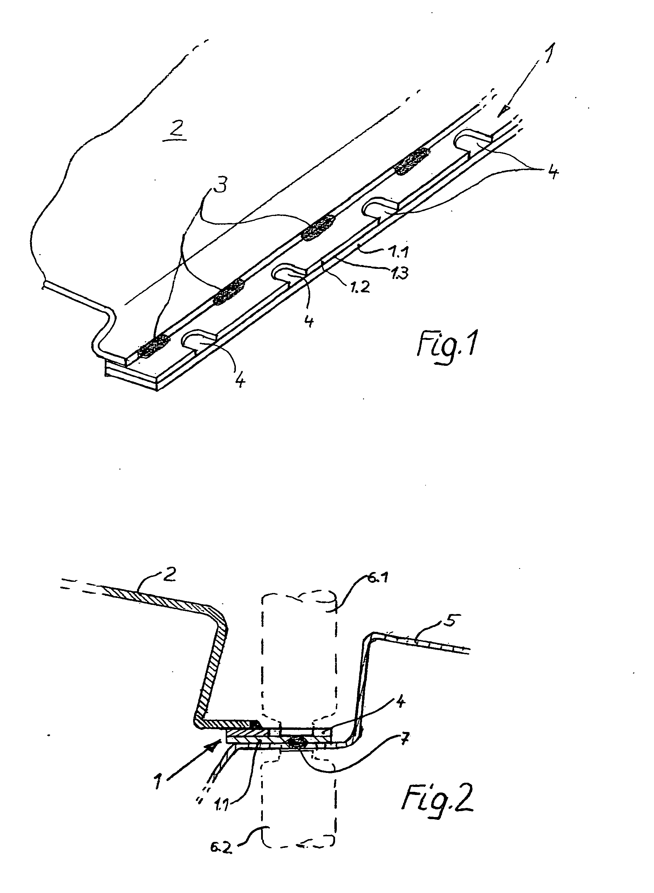

Bei dem in Fig. 1 dargestellten Ausführungsbeispiel besteht das streifenförmige, bimetallische Verbindungselement 1 aus einer unteren Schicht 1.1 aus einem eisenhaltigen Material und einer oberen Schicht 1.2 aus einem leichtmetallhaltigen Material, welche über eine gemeinsame Kontaktfläche 1.3 z. B. durch Walzen oder Sprengplattieren miteinander verbunden sind. Die obere Schicht 1.2 ist abschnittsweise über Kehlnähte 3 mit einem leichtmetallhaltigen Bauteil 2, z. B. einem Karosseriedach aus Aluminiumblech, verschweißt. In dem über die Kante 2.1 des Bauteils 2 hinausragenden Teil des Verbindungselementes 1 sind in der leichtmetallhaltigen Schicht 1.2 Aussparungen 4 vorgesehen, an denen das leichtmetallhaltige Material vollständig entfernt ist, so dass die eisenhaltige Schicht 1.1 an diesen Stellen freiliegt. Die Aussparungen 4 haben zumindest den Durchmesser von Schweißelektroden in einer Punktschweißanlage.

Die Fig. 2 zeigt in einem Querschnitt die Punktverschweißung des gemäß Fig. 1 präparierten Bauteils 2 mit einem eisenhaltigen Karosserieblech 5. Hierzu wird die Unterseite des Verbindungselementes 1, auf welcher sich die eisenhaltige Schicht 1.1 befindet, auf das formmäßig angepasste Karosserieblechen 5 gelegt. Von oben und unten werden nun zwei Elektroden 6.1 und 6. 2 einer Punktschweißanlage senkrecht zum einen auf die in der Aussparung 4 freigelegte Schicht 1.1 des Verbindungselementes 1 und zum anderen auf die gegenüberliegende Unterseite des Karosserieblechs 5 gedrückt und der Schweißstrom kurzzeitig eingeschaltet, woraufhin die beiden Teile 1.1 und 5 miteinander in einer Fügezone 7 verschmelzen.

Da sich im Bereich der Fügezone 7 ausschließlich eisenhaltiges Material befindet, kommt es hier zu keinerlei intermetallischen Phasen mit der leichtmetallhaltigen Schicht 1.2 des Verbindungselementes 1. Die freie Zugänglichkeit der eisenhaltigen Schicht 1.1 des Verbindungselementes 1 im Bereich einer vorgesehenen Schmelzschweißverbindung ermöglicht automatisierte Fügeprozesse von Leichtmetallbauteilen mit hochfesten Stählen im Karosseriebau, wobei einerseits Verformungen der leichtmetallhaltigen Bauteile und andererseits Korrosionsanfälligkeit und Festigkeitseinbußen in den eisenhaltigen Karosserieblechen vermieden werden. Dabei ist die Erfindung nicht auf Punktschweißverbindungen beschränkt; in analoger Weise können auch andere Schmelzschweißverfahren zur Verbindung des eisenhaltigen Karosserieblechs 5 mit dem Verbindungselement 1 zur Anwendung kommen.

## Patentansprüche

1. Bimetallisches Verbindungselement aus mindestens zwei übereinanderliegenden, an ihrer gemeinsamen Kontaktfläche miteinander verbundenen Schichten aus einem leichtmetallhaltigen und einem eisenhaltigen Material, wobei die leichtmetallhaltige Schicht des Verbindungselementes mit einem Leichtmetallbauteil und die eisenhaltige Schicht des Verbindungselementes durch eine Schweißverbindung mit einem eisenhaltigen Bauteil verbindbar ist, **dadurch gekennzeichnet, dass**
die eisenhaltige Schicht (1.1) auf Seiten der Kontaktfläche (1.3) in mindestens einem für die Verschweißung mit dem eisenhaltigen Bauteil (5) vorgesehenen Bereich (4) von der leichtmetallhaltigen Schicht (1.2) freigehalten ist.

2. Bimetallisches Verbindungselement nach Anspruch 1, **dadurch gekennzeichnet, dass**
das Verbindungselement (1) aus einem durchgehenden eisenhaltigen Blechstreifen und einem gleich breiten, mit Aussparungen und/oder Löchern (4) versehenen leichtmetallhaltigen Blechstreifen durch Walzen oder Sprengplattieren gefertigt ist.

3. Bimetallisches Verbindungselement nach Anspruch 1, **dadurch gekennzeichnet, dass**
das Verbindungselement aus einem durchgehenden eisenhaltigen und einem leichtmetallhaltigen Blechstreifen durch Walzen oder Sprengplattieren gefertigt ist und der eisenhaltige Blechstreifen breiter als der leichtmetallhaltige ist und diesen zumindest einseitig überragt.

4. Bimetallisches Verbindungselement nach Anspruch 1, **dadurch gekennzeichnet, dass**
das Verbindungselement aus im Wesentlichen gleich breiten, seitlich versetzt übereinanderliegenden, jeweils eisenhaltigen bzw. leichtmetallhaltigen Blechstreifen gefertigt ist.

5. Bimetallisches Verbindungselement nach einem der Ansprüche 1 bis 4, **dadurch gekennzeichnet, dass**
die leichtmetallhaltige Schicht (1.2) in einem oder mehreren der für die Verschweißung der eisenhaltigen Schicht (1.1) mit dem eisenhaltigen Bauteil (5) vorgesehenen Bereiche (4) abgearbeitet, insbesondere abgefräst ist.

6. Verfahren zur Verbindung eines Leichtmetallbleches mit einem eisenhaltigen Karosserieblech mittels eines bimetallischen Verbindungselementes nach einem der Ansprüche 1 bis 5, **dadurch gekennzeichnet, dass** die eisenhaltige Schicht des Verbindungselementes mit dem eisenhaltigen Karosserieblech in einem von der leichtmetallhaltigen Schicht freigehaltenen Bereich über eine Widerstands-, Plasma- oder Laserschweißung verbunden wird.

## Claims

1. A bimetallic connection element comprising at least two layers located one above the other, connected to one another at their common contact face and made of a light metal-containing and an iron-containing material, wherein the light metal-containing layer of the connection element can be connected to a light metal component and the iron-containing layer of the connection element can be connected by a weld connection to an iron-containing component, **characterised in that**
the iron-containing layer (1.1) is kept free of the light metal-containing layer (1.2) on the side of the contact face (1.3) in at least one region (4) provided for welding to the iron-containing component (5).

2. A bimetallic connection element according to claim 1, **characterised in that**
the connection element (1) is manufactured from a continuous iron-containing sheet metal strip and a light metal-containing sheet metal strip of equal width, provided with recesses and/or holes (4), by rolling or explosive cladding.

3. A bimetallic connection element according to claim 1, **characterised in that**
the connection element is manufactured from a continuous iron-containing sheet metal strip and a light metal-containing sheet metal strip by rolling or explosive cladding and the iron-containing sheet metal strip is wider than the light metal-containing one and projects over the latter at least on one side.

4. A bimetallic connection element according to claim 1, **characterised in that**
the connection element is manufactured from respective iron-containing and light metal-containing sheet metal strips, located one above the other in a laterally offset manner and substantially of the same width.

5. A bimetallic connection element according to any one of claims 1 to 4, **characterised in that**
the light metal-containing layer (1.2) is worked off, especially milled off, in one or more of the regions (4) provided for the welding of the iron-containing layer (1.1) to the iron-containing component (5).

6. A method for connecting a light metal sheet to an iron-containing body sheet by means of a bimetallic connection element according to anyone claims 1 to 5, **characterised in that** the iron-containing layer of the connection element is connected to the iron-containing body sheet in a region kept free of the light metal-containing layer by means of a resistance, plasma or laser weld.

## Revendications

1. Elément de liaison bimétallique formé d'au moins deux couches superposées, dont les surfaces de contact communes sont reliées ; ces couches étant l'une, en un matériau contenant un métal léger et l'autre, en un matériau contenant du fer, la couche contenant du métal léger de l'élément de liaison étant reliée à un composant en métal léger et la couche contenant du fer de l'élément de liaison étant reliée par une soudure à un composant contenant du fer,
**caractérisé en ce que**
la couche (1.1) contenant du fer sur les côtés de la surface de contact (1.3) est dégagée de la couche (1.2) contenant du métal léger dans une zone (4) prévue pour être soudée à la pièce (5) contenant du fer.

2. Elément de liaison bimétallique selon la revendication 1,
**caractérisé en ce que**
l'élément de liaison (1) est réalisé par un ruban de tôle continu, contenant du fer et un ruban de tôle contenant du métal léger, muni de dégagements et/ou trous (4), en étant fabriqué par laminage ou par plaquage à l'explosif.

3. Elément de liaison bimétallique selon la revendication 1,
**caractérisé en ce que**
l'élément de liaison se compose d'une bande de tôle, continue, contenant du fer et d'une bande de tôle contenant du métal léger, et il est réalisé par laminage ou par plaquage à l'explosif et
la bande de tôle contenant du fer est plus large que celle contenant un métal léger et déborde de celle-ci sur au moins un côté.

4. Elément de liaison bimétallique selon la revendication 1,
**caractérisé en ce que**
l'élément de liaison est réalisé avec des bandes tôle pratiquement de même largeur, superposées en étant décalées transversalement et contenant respectivement l'une, du fer et l'autre, du métal léger.

5. Elément de liaison bimétallique selon l'une des revendications 1 à 4,
**caractérisé en ce que**
la couche (1.2) contenant du métal léger est dégagée, et notamment dégagée à la fraise, dans au moins une ou plusieurs des zones (4) prévues pour souder la couche (1.1) contenant du fer au composant (5) contenant du fer.

6. Procédé de liaison d'une tôle en métal léger à une tôle de carrosserie contenant du fer, à l'aide d'un élément de liaison bimétallique selon l'une des revendications 1 à 5,
**caractérisé en ce que**
la couche contenant du fer de l'élément de liaison est reliée à la tôle de carrosserie contenant du fer dans une zone dégagée de la couche contenant du métal léger, par une liaison réalisée par un soudage par résistance, un soudage au plasma ou un soudage par laser.
